# EUROPEAN PATENT SPECIFICATION

(11) **EP 0 705 665 B1**
(45) Date of publication and mention of the grant of the patent: **07.01.1999**
(21) Application number: 95850172.8
(22) Date of filing: 02.10.1995
(51) Int. Cl.: B25J 19/00, B66C 13/12, F16G 13/16, F16L 3/015, B25J 5/02

(54) **System for transferring a robot**
Verfahrsystem für Roboter
Système de transfert pour robot

(30) Priority: 03.10.1994 FI 944614
(43) Date of publication of application: 10.04.1996
(73) Proprietor: PULMEK OY, 21500 Piikkiö (FI)
(72) Inventor: Pennanen, Hannu, FIN-20900 Turku (FI)
(74) Representative: Henningsson, Gunnar

(56) References cited:
- EP-A- 0 494 804
- DE-A- 2 010 113
- DE-B- 1 033 299
- DE-U- 9 010 796
- GB-A- 2 198 702

## Description

The present invention relates to a robot rail track comprising
- a running track formed of a pair of rails on floor level,
- a protective cover covering the running track and consisting primarily of a horizontal middle part parallel with the running track and downward bent edges,
- a robot carriage transferable along the running track above the protective cover,
- a power cable transmission chain having its one end, which is movable, connected to the robot, and
- means for connecting the power cable transmission chain to the robot mounted on the robot carriage.

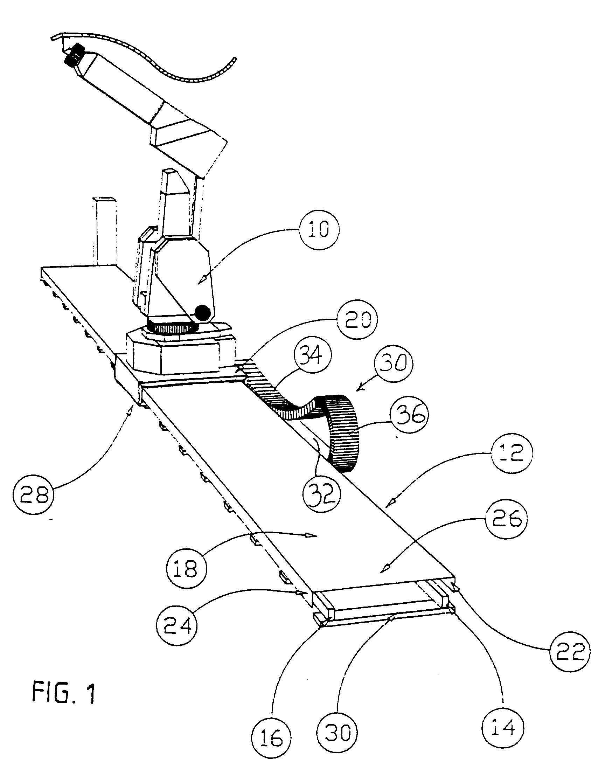

Such a robot rail track is known from the closest prior art disclosed in this application, see Fig.1 and the related text of the description.

It has become more and more common in engine works to employ e.g. the same robot in several different work stations. Thus the robot is mounted on a supporting frame on which the robot is, when needed, transferred along a linear guide e.g. a pair of rails from one work station to another.

The supporting frame of the robot then consists of a so-called robot carriage which is transversely placed over the pair of rails and attached to means sliding on the rails like bearing shoes. The robot carriage is moved e.g. by a toothed belt and then the length of the toothed belt determines the maximum length of the running track of the robot.

Power cables are led to the robot by means of a transmission chain which is generally disposed beside the running track. One end of the transmission chain is stationarily attached to the power source and the other end to the robot. The transmission chain is arranged to run partly twofold obtained by turning the chain 360 degrees in vertical plane. The moving part, which is attached to the robot, of the transmission chain is arranged to move on top of the other stationary part which is immovable.

The structural height of the transmission chain in a vertical plane is large due to the minimum permissible bending radius of the cables and therefore it occupies a lot of space beside the robot. Furthermore the chain restricts moving around the robot.

In robot stations chipping and e.g. welding is carried out causing metal chips, welding spatter, and other debris to accumulate on the floor around the machines. This debris causes trouble on the running track when it collects between the slide rail and the carriage or on the transmission chain. Therefore, it has been suggested to protect the running track with a low protective plate fitted tightly above the pair of rails. Due to lack of space, however, the transmission chain must have been left outside the running track and the protective plate.

Further from German patent application DE-A-2010113 is known an apparatus for moving several cables or pipes loosely connected to each other between tracks on an uncovered supporting surface. The cables/pipes are disposed one beside the other forming a loop on a horizontal plane, whereby adjacent cables/pipes glide along each other when the loop is moved. Such gliding movement increasing wear of cables is not desired.

The objective of the present invention is to obtain improvement to the above drawbacks.

The objective of the invention is to obtain a system in which the transmission chain can be fitted into a protected space where it does not restrict movement around the robot and where it is protected from chips and spatter produced in machining.

To obtain the above objectives the invention is characterized by what is defined in the claims presented hereinafter.

In the robot transferring system according to the invention the transmission chain is fitted in lying position under the protective cover into the space between the rails. The transmission chain is fitted between the pair of rails bent through 360 degrees in a horizontal plane so as to form two adjacent and essentially parallel chain parts under the protective cover. The part of the transmission chain that is connected to the robot is movable and the other part that is connected to the power source is mainly immovable. The length of the movable part and that of the mainly immovable part depend on the location of the robot on the running track. When the robot is at the end of the running track on the side of the power source, the movable part of the transmission chain has its maximum length. When the robot is at the other end, the movable part of the transmission chain has its minimum length.

Surprisingly it was realized that, by turning the transmission chain from the previous upright position to lying position, the chain could be fitted under a very low protective cover to be protected from chips and spatter generated in machining. Furthermore the transmission chain can be taken out of the way from the side of the running track. In lying position the transmission chain occupies only a space in vertical direction which equals to the width of the chain. This space exists under the protective cover between the rails of the running track. There is plenty of room between the rails in the horizontal longitudinal direction. In the horizontal transverse direction there is also room enough to bend the chain 360 degrees.

In one advantageous embodiment of the invention, the cables of the transmission chain are connected to the robot through a labyrinth structure. The labyrinth structure is joined to one end of the transmission chain in connection with the front edge of the robot carriage and the labyrinth structure leads the cables from the transmission chain over the upper side of the rail and under the downwards bent edge of the protective cover up on the robot carriage to be connected to the robot.

In one advantageous embodiment of the invention the system uses a particularly low robot carriage comprising
- a middle part extending primarily across the protective cover and forming a supporting base for the robot, and
- edge parts of the robot carriage on the sides of the running track surrounding the downward bent edges of the protective cover and being attached to the means sliding along the rails.

The edges of the protective cover and the carriage can be shaped so as to extend nearly to the basement of the running track leaving only a gap with a few millimetres in width, e.g. 20 - 30 mm, between the protective cover and the basement. Thus the actual running track with its rails and sliding means as well as the transmission chain between the rails are very well protected from chips, dust and spatter generated in the working environment.

The protective cover, which may have a width of ca 600-900 mm depending on the width of the running track, is preferably sustained by a supporting beam or column fitted between the rails of the running track and by horizontal supporting plates placed thereon. The material of the protective cover is advantageously steel plate but it may be any material suitable to the working environment in question even wood or plastic.

The protective cover may be constructed very low only slightly higher than the rails, e.g. to a height of only 10 - 20 cm, so that the protective cover does not constitute any obstacle in working stations. The protective cover may preferably be made of such a material that stands walking to thereby minimize the inconvenience caused by the running track. It is even possible to cover the running track with a protective cover of such strength that it stands running over even with a truck.

The invention will now be explained more closely referring to the enclosed drawings in which
- Fig. 1: shows schematically a robot rail track according to the closest prior art, using a conventional transmission chain,
- Fig. 2: shows schematically a robot rail track using a transmission chain installed according to the invention;
- Fig. 3: shows a part of the robot transferring system according to the invention from above with the running track, protective cover, and robot carriage;
- Fig. 4: shows an enlarged vertical cross-section of the system of Fig. 3 along the line AA, and
- Fig. 5: shows an enlarged vertical cross-section of the system of Fig. 3 along the line BB.

Fig. 1 shows a robot rail track according to the closest prior art, comprising a a running track 12, which is made up of a pair of guides or rails 14 and 16 and a protective cover 18. A robot 10 is placed on a carriage 20 moving on the rails.

The edges 22 and 24 of the protective cover are bent ca. 90° downward from the horizontal plate-like part 26 of the protective cover. In a corresponding way the edges of the carriage 20 are bent downward to form the edge part 28 of the carriage.

A transmission chain 30 is placed outside the edge 22 of the protective cover of the running track. One i.e. the lower part 32 of the transmission chain is immovable and is attached to the power transmission source not shown. The other i.e. the upper part 34 is movable and is connected to the robot 10. The transmission chain 30 is bent 360 degrees in a vertical plane at the bending point 36 which moves as the robot is transferred. The parts 32 and 34 of the transmission chain lying outside the bending point 36 are parallel and lie one upon the other. Right at the bending point 36 the transmission chain rises markedly high making it impossible to fit the chain under the protective cover 18.

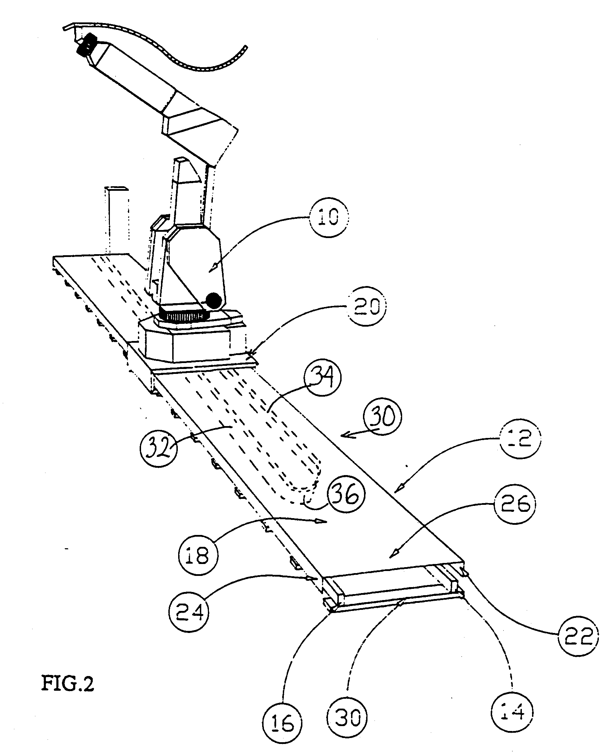

Fig. 2, in which the same reference numerals as in Fig. 1 have been used when appropriate, shows a robot transfer system according to the invention having the transmission chain 30, indicated by dashed lines, fitted under the protective cover. The transmission chain is in lying position so that the parts 32 and 34 of the transmission chain lie adjacent to each other and in the same plane.

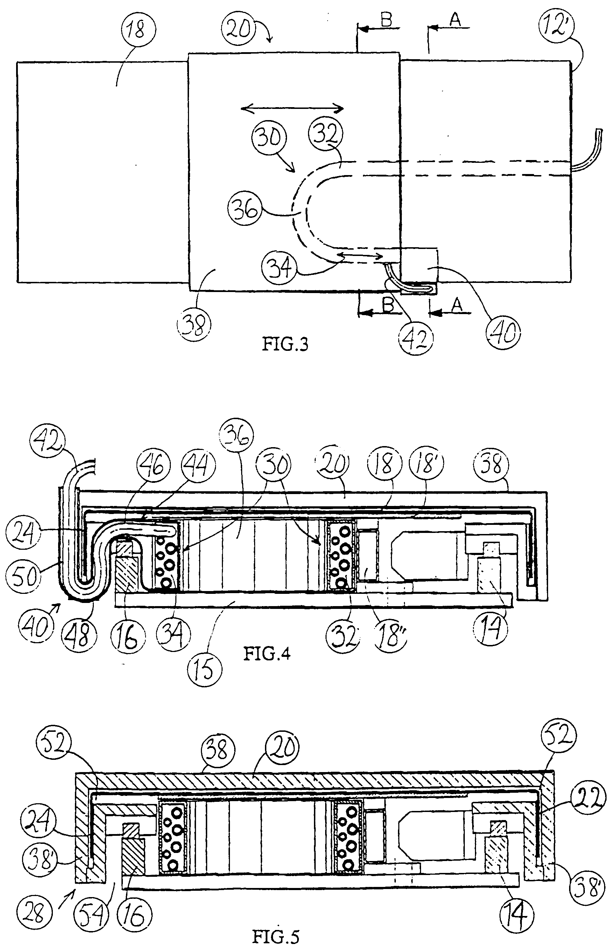

Fig. 3 shows a part of the robot transfer system according to the invention seen from above. The figure shows the protective cover 18 of the running track and the cover 38 of the carriage 20 bearing the robot. The transmission chain 30 running under the protective cover 18 is represented by dashed lines, one part 32 of it being connected to the power source outside the end 12' of the running track and the other part 34 being connected to a labyrinth structure 40 connected to the moving carriage 20 to lead the wires 42 therefrom to the robot which is not shown in the figure.

Fig. 4 shows an enlarged cross-section of Fig. 2 along the line AA. The figure shows as a cross-section the rails 14 and 16 covered by the protective cover 18, a supporting plate 18' sustaining the protective cover and a supporting pillar or beam 18'' as well as the front side of the carriage 20 seen from the front. The figure also shows the parts 32 and 34 of the transmission chain 30, the bending point 36, and the labyrinth structure 40 which connects the movable part 34 to the robot. The labyrinth structure 40 comprises a channel system 44 to lead the wires 42 from the transmission chain 34 to the upper side of the carriage 20. The channel system comprises a channel 46 going over the first rail 16 followed by another channel 48 going under the lower edge 24 of the protective cover and, communicating with this, a channel 50 leading straight up. With this labyrinth structure 40 made up of the channels 46, 48 and 50 the cables 42 are led safely from under the protective cover above the carriage.

Fig. 4 also shows that the pair of rails 14 and 16 are supported from the bottom to the base by a transverse support 15 forming a basement for the transmission chain 30. The transverse support 15 also forms a basement for the supporting pillar 18'' of the protective cover 18 which pillar supports the protective cover 18 by means of the supporting plate 18'.

Fig. 5, which is an enlargement of the cross-section of Fig. 2 along the line BB, shows the carriage 20 which is made up of a horizontal part 38 extending across the running track and the edge parts 38' forming the labyrinthic side structures. The side structures surround the edges 22 and 24 of the protective cover. The edge parts 38' of the carriage have been shaped similar to the bent edge parts 22 and 24 of the protective cover so that while the carriage moves the edge parts of the protective cover will move within the L-shaped gaps 52 formed by the edge parts of the carriage.

The vertical parts 38' of the carriage edge part extend downward nearly to the transverse support 15 so that only a small gap 54 of 20 - 30 mm remains between the vertical parts and the transverse support. The gap is so small that it prevents chips or the like from going between the rail 14 and 16 and the carriage 20.

## Claims

1. A robot rail track comprising
- a running track (12) formed of a pair of rails (14,16) on floor level,
- a protective cover covering the running track and consisting primarily of a horizontal middle part (26) parallel with the running track and downward bent edges (24),
- a robot carriage (20) transferable along the running track above the protective cover,
- a power cable transmission chain (30) having its one end (34), which is movable, connected to the robot, and
- means (40,44) for connecting the power cable transmission chain (30) to the robot (10) mounted on the robot carriage (20),
characterized in that
- the power cable transmission chain (30) is fitted in lying position under the protective cover (18) in the space between the rails (14,16), in a position in which the width side of the chain is in a vertical position.

2. A robot rail track according to claim 1 characterized in that the means (40,44) for connecting the power cable transmission chain (30) to the robot (10) comprise a labyrinth channel (44) leading from the inside of one rail (16) outside the robot carriage (20) for leading the power transmission cables (42) from the power cable transmission chain (30) to the robot (10), the labyrinth channel going from the power cable transmission chain over the rail (16) and under the edge (24) of the protective cover (18) outside the robot carriage.

3. A robot rail track according to claim 1 characterized in that the labyrinth channel (44) is connected to the front edge of the robot carriage (20).

4. A robot rail track according to claim 1 characterized in that the power cable transmission chain (30) is divided into two essentially parallel parts (32,34) by bending the power cable transmission chain 360 degrees in a horizontal plane, the part (34) of the power cable transmission chain connected to the robot being movable and the other part (32) essentially immovable, the lengths of the movable part and the other part depending on the position of the robot on the running track (12).

5. A robot rail track according to claim 1 characterized in that the robot carriage comprises
- middle part (38) extending primarily across the protective cover (18) and forming a supporting base for the robot, and
- edge parts (38') of the robot carriage on the sides of the running track surrounding the downward bent edges (24) of the protective cover and being attached to the means sliding along the rails.

## Patentansprüche

1. Roboterbahn, bestehend aus
- einer Laufschiene (12), die aus einem Paar von Schienen (14, 16) auf Fußbodenebene gebildet wird,
- einer Schutzverkleidung zur Bedeckung der Laufschiene, die vorwiegend aus einem horizontalen Mittelteil (26) parallel zur Laufschiene und mit nach unten gebogenen Kanten (24) besteht,
- einem Roboterschlitten (20) der die Laufschiene entlang über die Schutzverkleidung verschiebbar ist
- einer Stromkabel-Antriebskette (30), deren eine, das bewegliche Ende (34) mit dem Roboter verbunden ist, und
- Mitteln (40, 44) zum Verbinden der Stromkabel-Antriebskette (30) mit dem auf dem Roboterschlitten (20) montierten Roboter (10).
dadurch **gekennzeichnet**, daß
- die Stromkabel-Antriebskette (30) liegend unter der Verkleidung (18) im Raum zwischen den Schienen (14, 16) in einer Position angeordnet ist, wo sich die Breitseite der Kette in einer vertikalen Position befindet

2. Roboterbahn nach Anspruch 1, dadurch **gekennzeichnet**, daß die Mittel (40, 44) zur Verbindung der Stromkabel-Antriebskette (30) mit dem Roboter (10) einen Labyrinthkanal (44) umfassen, der von der Innenseite einer Schiene (16) zur Außenseite des Roboterschlittens (20) führt zur Leitung der Stromkabel (42) von der Stromkabel-Antriebskette (30) zum Roboter (10), welcher Labyrinthkanal von der Stromkabel-Antriebskette über die Schiene (16) und unter der Kante (24) der Schutzverkleidung (18) hindurch zur Außenseite des Roboterschlittens verläuft.

3. Roboterbahn nach Anspruch 1 dadurch **gekennzeichnet**, daß der Labyrinthkanal (44) mit der Vorderkante des Roboterschlittens (20) verbunden ist.

4. Roboterbahn nach Anspruch 1, dadurch **gekennzeichnet**, daß die Stromkabel-Antriebskette (30) in zwei wesentlich parallele Teile (32, 34) aufgeteilt ist, indem man die Stromkabel-Antriebskette in einer Horizontalebene um 360 Grad gebogen hat, wobei der mit dem Roboter verbundene Teil (34) der Stromkabel-Antriebskette beweglich und der andere Teil (32) im wesentlichen unbeweglich ist, wobei die Längen des beweglichen Teils und des anderen Teils von der Position des Roboters auf der Laufschiene (12) abhängig ist.

5. Roboterbahn nach Anspruch 1, dadurch **gekennzeichnet**, daß der Roboterschlitten besteht aus
- einem Mittelteil (38), der sich hauptsächlich quer über die Schutzverkleidung (18) erstreckt und eine tragende Unterlage für den Roboter bildet, und
- Kantenteilen (38') des Roboterschlittens seitlich der Laufschiene, die die nach unten gebogenen Kanten (24) der Schutzverkleidung umschließen und an den, die Schienen entlang gleitenden Mitteln befestigt sind.

## Revendications

1. Chemin de rails pour robot comprenant :
- une piste de circulation (12) formée d'une paire de rails (14, 16) au niveau du sol,
- un couvercle de protection recouvrant la piste de circulation et constitue principalement d'une partie centrale horizontale (26) parallèle à la piste de circulation et de bordures recourbées vers le bas (24),
- un chariot à robot (20) pouvant se déplacer le long de la piste de circulation au-dessus du couvercle de protection,
- une chaîne d'entraînement de câble électrique (30) présentant sa première extrémité (34), laquelle est mobile, connectée au robot , et
- des moyens (40, 44) pour connecter la chaîne d'entraînement de câble électrique (30) au robot (10) monté sur le chariot à robot (20),
caractérisé en ce que
- la chaîne d'entraînement de câble électrique (30) est ajustée dans une position horizontale sous le couvercle de protection (18) dans l'espace compris entre les rails (14, 16) , dans une position dans laquelle le côté correspondant à la largeur de la chaîne se trouve dans une position verticale.

2. Chemin de rails pour robot selon la revendication 1 caractérisé en ce que les moyens (40, 44) de connexion de la chaîne d'entraînement de câble électrique (30) au robot (10) comprennent un canal en labyrinthe (44) allant de l'intérieur d'un rail (16) à l'extérieur du chariot à robot (20) pour amener les câbles d'entraînement de courant (42) de la chaîne d'entraînement de câble électrique (30) au robot (10), le canal en labyrinthe allant de la châine d'entraînement de câble électrique sur le rail (16) et sous la bordure (24) du couvercle de protection (18) vers l'extérieur du chariot à robot.

3. Chemin de rails pour robot selon la revendication 1 caractérisé en ce que le canal en labyrinthe (44) est connecté au bord avant du chariot à robot (20).

4. Chemin de rails pour robot selon la revendication 1 caractérisé en ce que la chaîne d'entraînement de câble électrique (30) est divisée en deux parties essentiellement parallèles (32, 34) en courbant la chaîne d'entraînement de câble électrique de 360 degrés dans un plan horizontal, la partie (34) de la chaîne d'entraînement de câble électrique connectée au robot étant mobile et l'autre partie (32) étant essentiellement fixe, les longueurs de la partie mobile et de l'autre partie immobile étant fonction de la position du robot sur la piste de circulation (12).

5. Chemin de rails pour robot selon la revendication 1, caractérisé en ce que le chariot à robot comprend
- une partie centrale (38) s'étendant principalement à travers le couvercle de protection (18) et formant une base de support pour le robot, et
- des parties de bord (38') du chariot à robot sur les côtés de la piste de circulation entourant les bordures recourbées vers le bas (24) du couvercle de protection et fixées aux moyens coulissant le long des rails.
